# EUROPEAN PATENT APPLICATION

(11) **EP 1 838 026 A1**
(43) Date of publication of application: **26.09.2007**
(21) Application number: 06253203.1
(22) Date of filing: 21.06.2006
(51) Int. Cl.: H04L 1/18

(54) **Packet transmission apparatus with retransmission protocol**

(30) Priority: 20.03.2006 JP 2006077299
(71) Applicant: FUJITSU LIMITED, Kawasaki-shi, Kanagawa 211-8588 (JP)
(72) Inventor: Kawabata, Kazuo, Fujitsu Limited, Kawasaki-shi, Kanagawa 211-8588 (JP); Obuchi, Kazuhisa, Fujitsu Limited, Kawasaki-shi, Kanagawa 211-8588 (JP); Tajima, Yoshiharu, Fujitsu Limited, Kawasaki-shi, Kanagawa 211-8588 (JP)
(74) Representative: Hitching, Peter Matthew

(57) **Abstract**

Wasteful use of radio resources is minimized in a packet transmission system which performs retransmission control at a higher layer. When transmission of a segment has failed at a lower layer and, for example, when the number of lower-layer retransmit requests from an error detection unit at the lower layer has exceeded a predetermined threshold, any other segment remaining to be transmitted in a packet of which the failed segment forms a part is discarded and, at the same time, a retransmit request is sent to a retransmission control unit at the higher layer.

## Description

### BACKGROUND OF THE INVENTION

### 1. Field of the Invention

The present invention relates to a packet transmission apparatus and, more particularly, to a packet transmission apparatus suitable for application to a base transceiver station and a mobile station in a mobile communication system.

### 2. Description of the Related Art

In communications using radio waves and, in particular, communications between base transceiver stations (BTSs) and mobile stations (MSs) in a mobile communication system, it is important that radio resources, such as frequencies and spreading codes, be utilized effectively. The reason is that, in a mobile communication system, limited radio resources linking between each BTS and MSs are shared by many users and, if the radio resources can be utilized effectively, more users can be accommodated in the system.

On the other hand, in a W-CDMA (Wideband Code Division Multiple Access) system, for example, in addition to the retransmission control at the MAC(Media Access Control) sublayer, a retransmission control mechanism is provided at the RLC (Radio Link Control) sublayer above the MAC sublayer in order to perform error recovery and to guarantee the sequencing of data in a radio transmission. In HSDPA (High Speed Downlink Packet Access) which is a packet transmission scheme for the W-CDMA system, the radio retransmission control at the MAC sublayer is implemented in the BTS, while the retransmission control at the RLC sublayer is implemented in the RNC (Radio Network Controller).

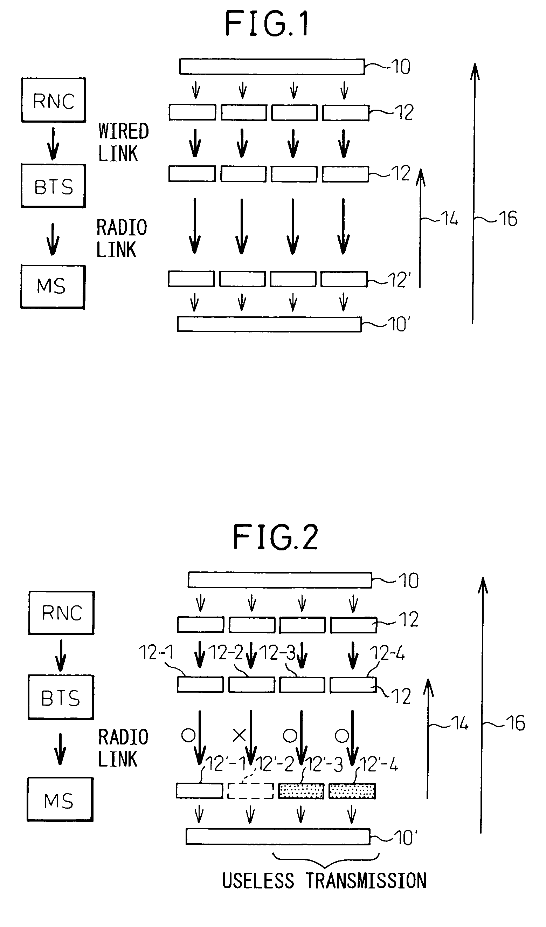

Figure 1 schematically shows the retransmission control at the RLC sublayer (the higher layer) implemented in the RNC and the retransmission control at the MAC sublayer (the lower layer) implemented in the BTS. In the RNC, a higher-layer retransmission unit (packet) 10 is segmented into lower-layer retransmission units (segments) 12 and transmitted to the BTS via a wired link. Then, the BTS transmits them as radio signals. The transmitted signals are received by the MS which assembles the received segments 12' into a packet 10', thereby reconstructing the higher-layer signal provided by the RNC. When transmitting the segments from the BTS to the MS, a control scheme that combines, for example, ARQ (Automatic Repeat Request) and error correction coding, known as hybrid ARQ, is used. Using this scheme, if any segment received at the MS is in error and the error is uncorrectable, the MS sends a retransmit request 14 to the BTS to recover from the error. Independently of the above control, retransmission control is also performed on the higher-layer signal from the RNC to the MS. That is, if the packet 10' assembled at the MS is in error, a retransmit request 16 is sent to the RNC via the BTS.

When the retransmission control is implemented at the higher layer as shown in Figure 1, if a certain segment fails to be received correctly over the radio link between the BTS and the MS, radio resources will be wastefully used. For example, as shown in Figure 2, suppose that, of segments 12'-1 to 12'-4, the second segment 12'-2 has failed to be received but the subsequent segments 12'-3 and 12'-4 have successfully been received; in this case, the retransmit request 16 is sent to the higher layer, since the packet 10' cannot be assembled. In response to the retransmit request, the packet 10 is retransmitted and divided into segments, and the segments 12-1 to 12-4 are once again transmitted out from the BTS. As a result, the previously transmitted segments 12-3 and 12-4 are rendered useless. Here, retransmission of the segment 12-1 also renders the previously transmitted segment 12-1 useless, but the segment 12-1 is always transmitted regardless of whether the segment 12'-2 is received or not received at the MS.

Even when the retransmission control is also implemented at the lower layer as earlier described, error recovery may not be accomplished; in that case, the result will be the same as described above.

US2003/0091068 discloses that during reception of a higher-layer packet, segmented into lower-layer frames, a receiver will appropriately determine if a lower-layer frame was correctly received. If a lower-layer frame is not correctly received, and the maximum number of NAKs have been sent, the lower-layer frame is categorized as aborted. Once a frame has been categorized as aborted, the receiver will send no more NAKs for a predetermined number of lower-layer frames. In particular, those lower-layer frames associated with the higher-layer packet will fail to have NAKs sent even if they are improperly received.

US2004/0030790 discloses a data communication method for communicating packetized data via an interface between a transmitter and a receiver, wherein communication relies on a layered communication protocol stack comprising at least two protocol layers of different hierarchy level, wherein at least data communication on a lower one of said layers adopts a retransmission scheme for data packets for which an acknowledgment of receipt was not received at the transmitter. The method comprising the steps of initializing the retransmission scheme of the lower one of said layers by setting a condition parameter, wherein fulfilling the condition defined by the condition parameter represents an indication as to how to control the retransmission scheme, wherein initializing comprises setting said condition parameter of the lower one of said layers according to information forwarded from said higher one of said layers to said lower one of said layers, transmitting packet data from the transmitter via the interface to the receiver according to the retransmission scheme of said lower one of said layers, detecting that said condition is fulfilled during transmitting, and controlling said retransmission scheme of said lower one of said layers in response to said detecting.

### SUMMARY OF THE INVENTION

Accordingly, it is desirable to minimize wasteful use of the radio resources.

According to an embodiment of the present invention, there is provided a packet transmission apparatus comprising: a transmitting unit for transmitting a packet divided into a plurality of segments; and characterized by a transmission control unit which, when an uncorrectable error has occurred in a segment, stops transmission of any other segment remaining to be transmitted in said packet of which the failed segment forms a part.

When the transmission of a segment has failed (or an uncorrectable error has occurred in a segment), as the transmission of any other segment remaining to be transmitted in the packet of which the failed segment forms a part is stopped, wasteful transmissions can be reduced. By reducing wasteful transmissions, the radio resources can be effectively utilized and, as a result, transmission throughput can be increased.

### BRIEF DESCRIPTION OF THE DRAWINGS.

Figure 1 is a diagram for explaining retransmission control at a higher layer;
Figure 2 is a diagram for explaining a problem associated with the prior art;
Figure 3 is a block diagram showing a first embodiment of the present invention;
Figure 4 is a block diagram showing a second embodiment of the present invention;
Figure 5 is a block diagram showing a third embodiment of the present invention;
Figure 6 is a diagram for explaining information to be appended to each segment; and
Figure 7 is a block diagram showing a fourth embodiment of the present invention.

### DESCRIPTION OF THE PREFERRED EMBODIMENTS

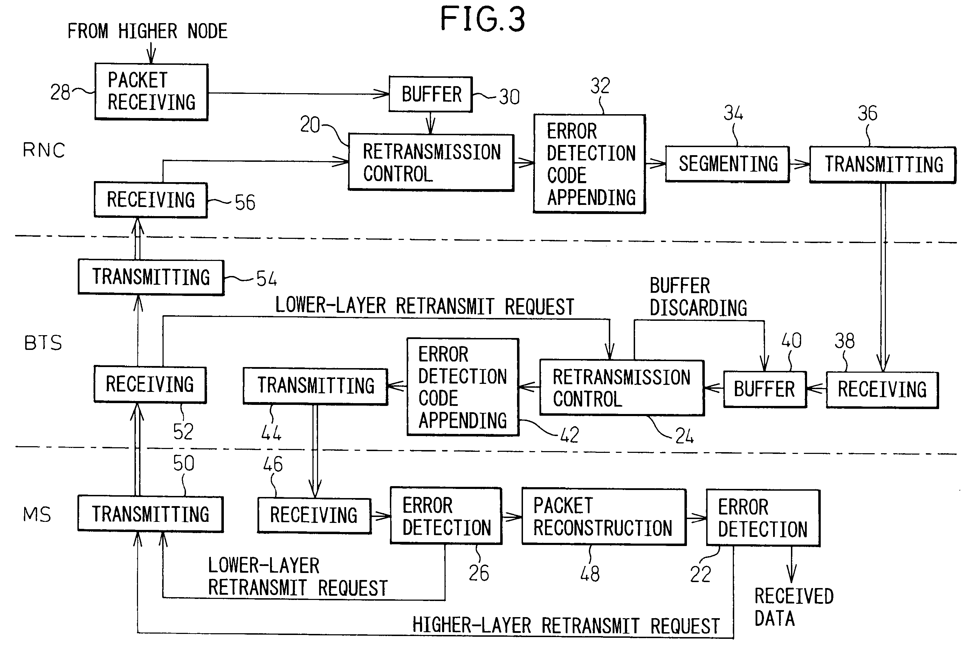

Figure 3 shows the configuration of a mobile communication system according to one embodiment of the present invention.

The retransmission control at the higher layer is performed between a retransmission control unit 20 in the RNC and an error detection processing unit 22 in the MS, while the retransmission control (of the segmented data) at the lower layer is performed between a retransmission control unit 24 in the BTS and an error detection processing unit 26 in the MS.

In the RNC, a packet receiving unit 28 receives a packet from the higher node, and stores it in a buffer 30. Then, the retransmission control unit 20 retrieves the data stored in the buffer 30 and supplies it to an error detection code appending unit 32 where an error detection code is appended; the data is then segmented by a segmenting unit 34 and a transmission format is generated by a transmitting unit 36 for transmission to the BTS.

In the BTS, a receiving unit 38 receives the data from the RNC, and stores it in a buffer 40 in the form of segments as generated by the RNC. Then, the retransmission control unit 24 retrieves the data stored in the buffer 40 on a segment-by-segment basis, appends an error detection code (42), and transmits the data to the MS via a transmitting unit 44.

In the MS, a receiving unit 46 receives the data from the BTS, and the error detection processing unit 26 performs error detection for the lower layer by using the error detection code appended by the BTS. If there is no error, a packet is reconstructed (48) from the received segments, and the error detection processing unit 22 performs error detection for the higher layer by using the error detection code appended by the RNC. If there is no error, the packet is taken to be the received data.

If an uncorrectable error from the higher layer is detected by the error detection processing unit 22, the error detection processing unit 22 generates a higher-layer retransmit request signal, which is transmitted from a transmitting unit 50 to the BTS. The request signal is received by a receiving unit 52 in the BTS and transmitted from a transmitting unit 54 on to a receiving unit 56 in the RNC. In response, the retransmission control unit 20 retransmits the higher-layer data.

If an uncorrectable error from the lower layer is detected by the error detection processing unit 26, the error detection processing unit 26 generates a lower-layer retransmit request signal, which is transmitted from the transmitting unit 50 to the BTS. In response, the retransmission control unit 24 retransmits the lower-layer data. The procedure up to this point is the same as that known in the art.

Here, if a preset number of lower-layer retransmissions (or a preset timer count) is reached, the transmission of the data that follows that segmented data is stopped, and the data stored in the buffer 40 connected to the retransmission control unit 24 is discarded.

In this case, the higher-layer data (higher-layer retransmission unit) is retransmitted when the preset timer count in the retransmission control unit 20 is reached.

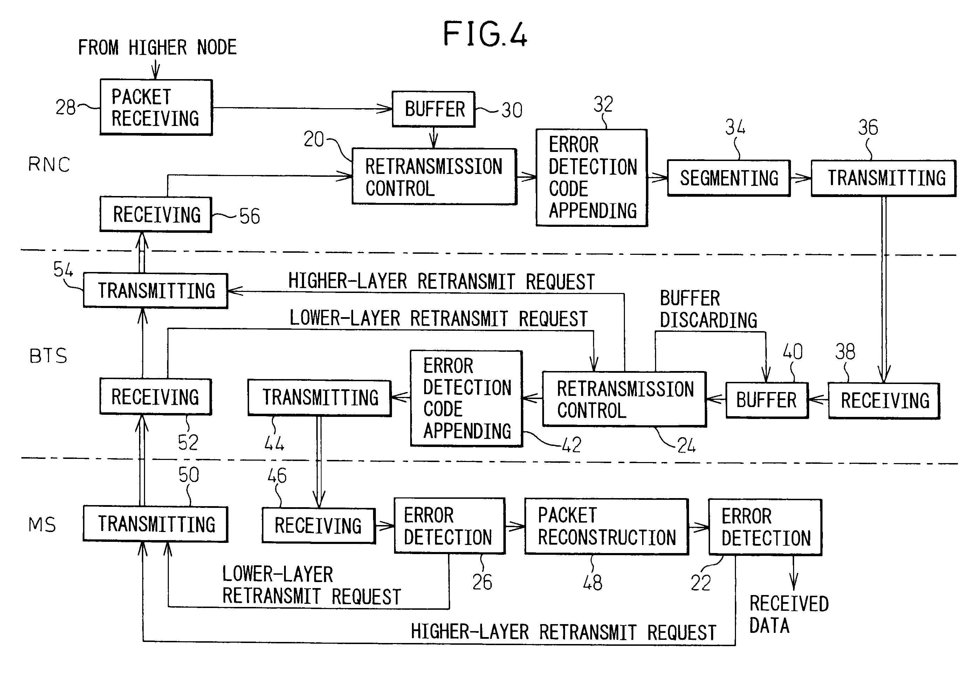

Figure 4 shows the configuration of a mobile communication system according to a second embodiment of the present invention. The difference from the embodiment of Figure 3 is that, when the preset number of retransmissions or the preset timer count is reached in the retransmission control unit 24 at the lower layer, not only is the data stored in the buffer 40 discarded but, at the same time, a higher-layer retransmit request is issued from the retransmission control unit 24 and transmitted to the higher layer via the transmitting unit 54 and the receiving unit 56. Here, as described above, in response to the data delivery failure and the data discarding at the lower layer, the retransmission from the higher layer is initiated after a prescribed time has elapsed but, in this embodiment, the retransmission can be initiated without delay by issuing the retransmit request from the retransmission control unit 24 at the lower layer to the retransmission control unit 20 at the higher layer upon discarding the data.

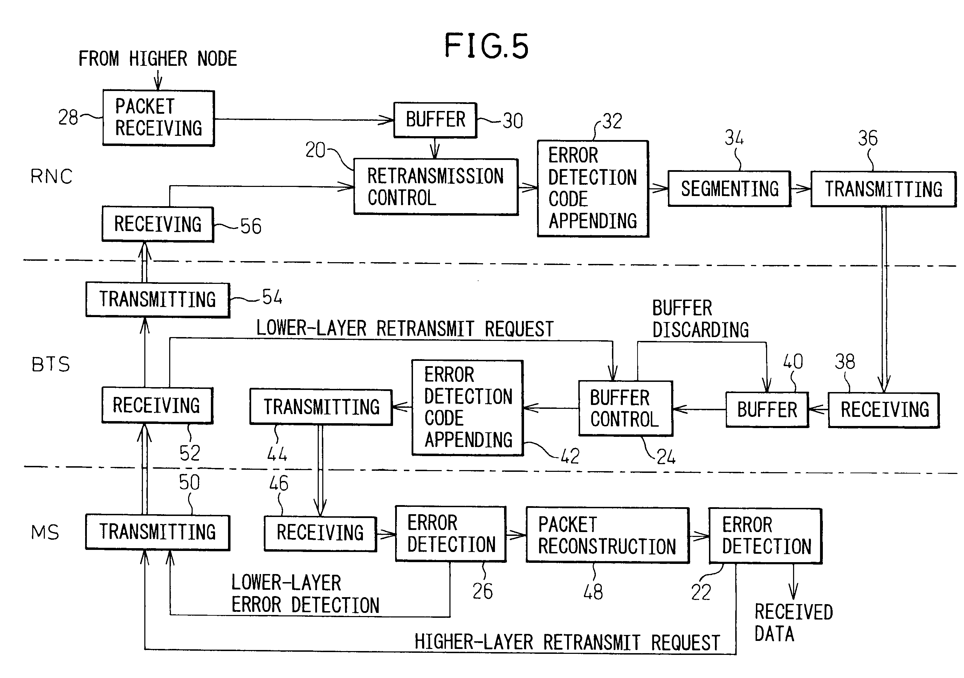

Figure 5 shows the configuration of a mobile communication system according to a third embodiment of the present invention. The difference from the embodiment of Figure 3 is that when a notification of the occurrence of an uncorrectable error is received from the error detection processing unit 26 at the lower layer, the unit 24 does not retransmit the segment, but immediately discards the contents of the buffer 40. In this way, in the present invention, the retransmission control at the lower layer is not an essential requirement.

In the embodiment of Figure 5, the retransmit request may be issued to the higher layer upon discarding the contents of the buffer 40, as in the embodiment of Figure 4.

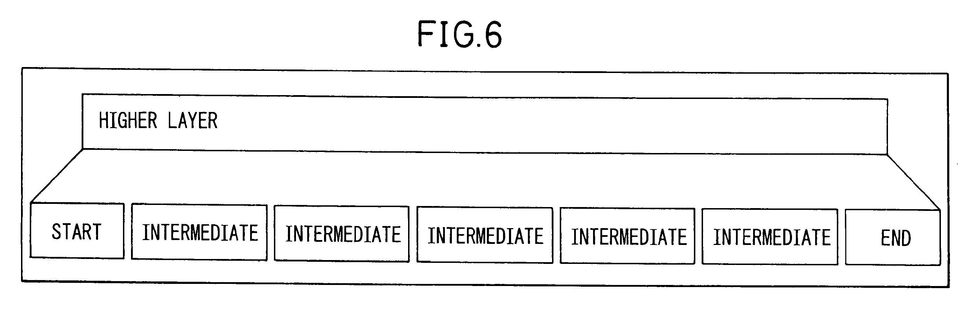

When applying the packet transmission method of the present invention, necessary information associated with segmentation must be appended to each segment. One example is shown in Figure 6. As shown in Figure 6, when dividing the higher-layer packet into segments, information identifying the segment position, i.e., the starting segment, an intermediate segment, or the ending segment, is appended to each segment. Based on this information, the packet is reconstructed from the segments starting from the segment labelled START and ending with the segment labelled END. When the retransmission control unit 20 in the RNC initiates the higher-layer retransmission, the MS at the receiving end receives the segment labelled START without receiving the segment labelled END, and the MS thus knows that the retransmission has been initiated in the middle of the transmission of the higher-layer data. Accordingly, at the MS, the higher-layer data assembled up to that point is discarded, and the data is reassembled starting from the segment labelled START, thereby reconstructing the correct higher-layer data. Further, at the BTS, by discharging the buffer contents up to the segment labelled END, it becomes possible to locate the segment for starting the next higher-layer data.

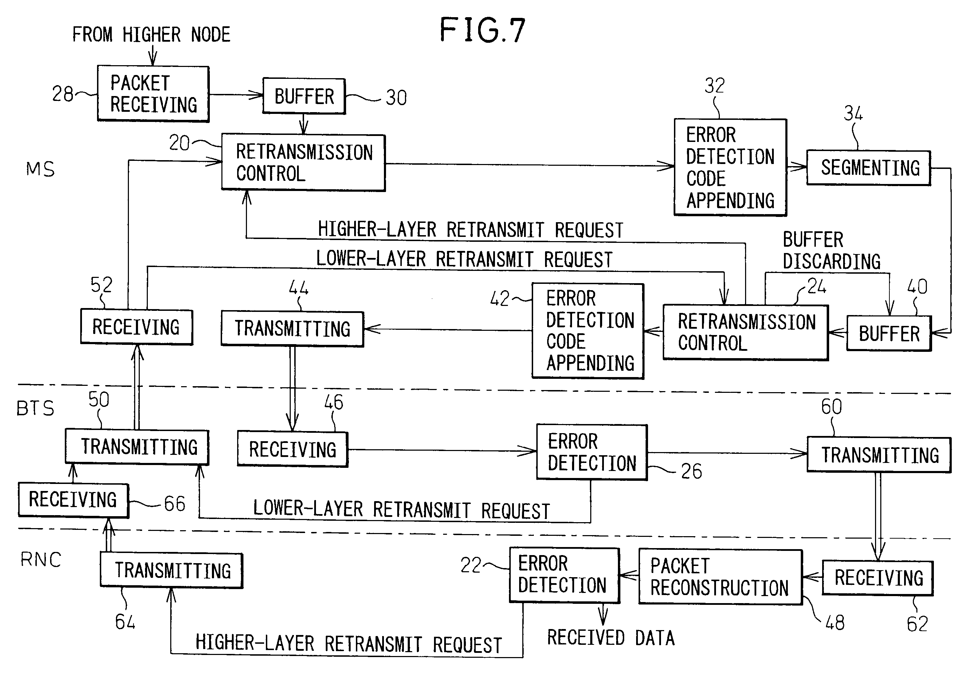

Figure 7 shows an example in which the packet transmission method shown in Figure 4 is applied to the uplink data transmission from the MS to the RNC, not to the downlink data transmission from the RNC to the MS.
In this example, the component elements provided in the RNC and BTS in Figure 4 are provided in the MS. Accordingly, the transmitting units 36 and 54 and the receiving units 38 and 56 are eliminated. In Figure 7, the component elements corresponding to those in Figure 4 are designated by the same reference numerals as those used in Figure 4. On the other hand, the component elements provided in the MS in Figure 4 are divided between the BTS and the RNC, the boundary being between the packet reconstruction unit 48 and the error detection processing unit 26, and transmitting units 60 and 64 and receiving units 62 and 66 are added.

Similarly, the packet transmission methods shown in Figures 3 and 5 can also be applied to the uplink data transmission.

Further, in the examples of Figures 3 to 5, as in the example of Figure 7, the component elements contained in the RNC and BTS can be housed in a single cabinet, for example, in the BTS. In this case also, the transmitting units 36 and 54 and the receiving units 38 and 56 can be eliminated.

## Claims

1. A packet transmission apparatus comprising:
a transmitting unit which transmits a packet divided into a plurality of segments; and
a transmission control unit which, when it is determined that transmission of a segment has failed, stops transmission of any other segment remaining to be transmitted in said packet of which said failed segment forms a part.

2. A packet transmission apparatus according to claim 1, wherein said transmission control unit retransmits said segment in response to a retransmit request received from a receiving side, and
determines that the transmission of said segment has failed if the number of retransmissions of said segment has exceeded a predetermined number.

3. A packet transmission apparatus according to claim 1, wherein said transmission control unit retransmits said segment in response to a retransmit request received from a receiving side, and
determines that the transmission of said segment has failed if the transmission of said segment has not been completed within a predetermined time.

4. A packet transmission apparatus according to any one of claims 1 to 3, wherein when it is determined that the transmission of said segment has failed, said transmission control unit sends a request to a higher layer for retransmission of said packet of which said failed segment forms a part.

5. A packet transmission apparatus according to any one of claims 1 to 4, further comprising:
a segmenting unit which divides said packet into said plurality of packets; and
a higher layer retransmission control unit which performs retransmission control at said layer.

6. A packet transmission method comprising:
transmitting a packet divided into a plurality of segments; and
when it is determined that transmission of a segment has failed, then stopping transmission of any other segment remaining to be transmitted in said packet of which said failed segment forms a part.

7. A packet transmission method according to claim 6, wherein stopping said transmission includes:
retransmitting said segment in response to a retransmit request received from a receiving side; and
determining that the transmission of said segment has failed if the number of retransmissions of said segment has exceeded a predetermined number.

8. A packet transmission method according to claim 6, wherein stopping said transmission includes:
retransmitting said segment in response to a retransmit request received from a receiving side; and
determining that the transmission of said segment has failed if the transmission of said segment has not been completed within a predetermined time.

9. A packet transmission method according to any one of claims 6 to 8, wherein stopping said transmission includes: when it is determined that the transmission of said segment has failed, sending a request to a higher layer for retransmission of said packet of which said failed segment forms a part.

10. A packet transmission method according to any one of claims 6 to 9, further comprising:
dividing said packet into said plurality of packets; and
performing retransmission control at said layer.

## Amended claims

### Amended claims in accordance with Rule 86(2) EPC.

**1.** A packet transmission apparatus comprising:
a transmitting unit (36) for transmitting a packet divided into a plurality of segments; and **characterized by**
a transmission control unit (20,22,24,26) which, when an uncorrectable error has occurred in a segment, stops transmission of any other segment remaining to be transmitted in said packet of which said failed segment forms a part.

**2.** A packet transmission apparatus according to claim 1, wherein when an uncorrectable error has occurred in said segment, said transmission control unit (20,22,24,26) sends a request to a higher layer for retransmission of said packet of which said failed segment forms a part.

**3.** A packet transmission apparatus according to claim 1 or 2, further comprising:
a segmenting unit (34) which divides said packet into said plurality of segments; and
a higher layer retransmission control unit (20) which performs retransmission control at said layer.

**4.** A packet transmission method comprising:
transmitting a packet divided into a plurality of segments; and **characterized by**
when an uncorrectable error has occurred in a segment, stopping the transmission of any other segment remaining to be transmitted in said packet of which said failed segment forms a part.

**5.** A packet transmission method according to claim 4, wherein stopping said transmission includes: when an uncorrectable error has occurred in said segment, sending a request to a higher layer for retransmission of said packet of which said failed segment forms a part.

**6.** A packet transmission method according to claim 4 or 5, further comprising:
dividing said packet into said plurality of segments; and
performing retransmission control at a higher layer.
